# EUROPÄISCHE PATENTSCHRIFT

(11) **EP 1 969 220 B1**
(45) Veröffentlichungstag und Bekanntmachung des Hinweises auf die Patenterteilung: **09.10.2013**
(21) Anmeldenummer: 06819889.4
(22) Anmeldetag: 01.12.2006
(51) Int. Cl.: F02D 35/02

(54) **VERFAHREN ZUR VEREINFACHUNG DER MOMENTENAUFTEILUNG BEI MEHRFACHANTRIEBEN**
METHOD FOR SIMPLIFYING TORQUE DISTRIBUTION IN MULTIPLE DRIVE SYSTEMS
PROCEDE DE SIMPLIFICATION DE LA REPARTITION DU COUPLE DANS LE CAS DE MECANISMES D'ENTRAINEMENT MULTIPLES

(30) Priorität: 29.12.2005 DE 102005062868
(43) Veröffentlichungstag der Anmeldung: 17.09.2008
(73) Patentinhaber: Robert Bosch GmbH, 70442 Stuttgart (DE)
(72) Erfinder: KAEFER, Oliver, 71711 Murr (DE); NIEMANN, Holger, 71634 Ludwigsburg (DE); HAGMAN, Per, 70469 Stuttgart (DE); SEEL, Andreas, 71282 Hemmingen (DE)
(86) Internationale Anmeldenummer: PCT/EP2006/069189
(87) Internationale Veröffentlichungsnummer: WO 2007/077067

(56) Entgegenhaltungen:
- WO-A-03/062004
- DE-A1- 10 155 128
- DE-A1- 19 739 565
- DE-A1-102004 062 012

## Beschreibung

Die Erfindung bezieht sich auf ein Verfahren zur Vereinfachung der Überwachung der Momentenaufteilung bei Mehrfachantrieben, insbesondere bei Hybridäntrieben von Hybridfahrzeugen.

### Stand der Technik

Aus DE 103 20 017 A1 ist eine Steuereinrichtung für die- Antriebseinheit eines Kraftfahrzeugs bekannt, wobei die Steuereinrichtung die Antriebseinheit insbesondere hinsichtlich eines abgegebenen Antriebsmoments steuert oder regelt und die Antriebseinheit einer Verbrennungskraftmaschine eines Kraftfahrzeugs ist. Das Kraftfahrzeug umfasst dabei üblicherweise eine durch den Fahrer des Kraftfahrzeugs betätigbaren Fahrerwunsch-Übertragungseinrichtung, insbesondere ein mit dem Fuß betätigbares Fahrpedal. Diese ist dafür vorgesehen, einen momentanen Betätigungszustand der Fahrerwunsch-Übertragungseinrichtung repräsentierendes Ausgangssignal abzugeben. Eine Steuereinheit empfängt das Ausgangssignal von der Fahrwunsch-Übertragungseinrichtung und ordnet dem empfangenen Ausgangssignal wenigstens eine Soll-Ausgangsgröße, bei der es sich insbesondere um ein Soll-Antriebsmoment der Antriebseinheit handelt, zu. Die Antriebseinheit wird von der Steuereinrichtung derart angesteuert, dass sich eine von der Antriebseinheit abgegebene Ist-Ausgangsgröße der Soll-Ausgangsgröße annähert. Derartige Steuereinrichtungen sind in verschiedenen Auslegungen für übliche Kraftfahrzeugmotoren, insbesondere Ottomotoren und Dieselmotoren, bekannt, z.B. Bosch-Motorsteuerungssysteme mit elektronischem Gaspedal (EGAS).

Ferner ist bekannt, eine kontinuierliche Momentenüberwachung zur Aufdeckung von Fehlfunktionen in Steuergeräten durchzuführen. Dies dient dem Schutz von Fahrinsassen im Kraftfahrzeug sowie dem Schutz externer Verkehrsteilnehmer. Durch die kontinuierliche Momentenüberwachung soll eine ungewollte Beschleunigung des Fahrzeugs vermieden werden. Der Kern der kontinuierlichen Momentenüberwachung. liegt in einem Vergleich eines vom Motor bereitgestellten Ist-Moments mit einem zulässigen Moment: Im Normalfall ist das Ist-Moment kleiner als das zulässige Moment. Falls das Ist-Moment das zulässige Moment übersteigt, liegt ein Fehler im Motorsteuergerät vor und eine zu einem sicheren Fahrzeugzustand führende Fehlerreaktion wird eingeleitet. Die Überwachung der Motorsteuergeräte erfolgt üblicherweise nach einem 3-Ebenen-Überwachungskonzept. Die Motorsteuerung selbst, insbesondere die Vorgabe des Soll-Moments erfolgt dabei in der als Funktionsebene bezeichneten ersten Ebene. Die zweite Ebene (Überwachungsebene) ist als die kontinuierliche Momentenüberwachung ausgerührt. In dieser Ebene wird unter anderem in Abhängigkeit von Fahrzeug- und Motorfunktionen ein zulässiges Moment ermittelt und mit einem Motor-Ist-Moment verglichen. Die zweite Ebene wird aufwendig durch eine dritte Ebene abgesichert, so z.B. durch Doppelablage aller Variablen, zyklische RAM- und ROM-Prüfung, Programmablaufkontrollen sowie Befehltests.

DE 107 39 565 A1 hat ein Verfahren zur Steuerung des Drehmoments einer Antriebseinheit eines Kraftfahrzeugs zur Gegenstand, bei welchem das Drehmoment der Antriebseinheit wenigstens nach Maßgabe des Fahrerwunsches eingestellt wird, wobei das Ist-Moment der Antriebseinheit bestimmt wird und wenigstens auf der Basis des Fahrerwunsches ein maximal zulässiges Drehmoment ermittelt wird. Es erfolgt eine Drehmomentenreduzierung und/oder -begrenzung bei Überschreiten des maximal zulässigen Moments durch das Ist-Drehmoment: Dabei wird wenigstens ein Betriebszustand festgestellt, in dem das Drehmoment der Antriebseinheit durch zusätzliche Belastung erhöht ist. Während dieses wenigstens einen Betriebszustands wird das maximal zulässige Moment erhöht. Insbesondere wird dadurch beim Betrieb mit kalter Antriebseinheit und/oder beim Betrieb belastender Verbraucher das zulässige Moment erhöht. Weitere Dokumente aus dem Stand der Technik sind: DE 101 55 128 und DE 10 2004 013 581.

Die beschriebenen, aus dem Stand der Technik hervorgehenden Verfahren der Momentenüberwachung sind nicht ohne weiteres auf Hybridfahrzeuge zu übertragen. In Hybridfahrzeugen kommt neben einem Verbrennungsmotor mindestens eine weitere Momentenquelle (Motor) zum Einsatz. In den meisten Fällen handelt es sich hierbei um einen Elektroantrieb. In der Motorsteuerung, muss nun das vom Fahrer geforderte Wunschmoment, welches beispielsweise durch Bedienen eines Fahrpedals eingestellt wird, auf die vorhandene Momentenquelle, die zumindest zwei Motoren umfasst, aufgeteilt werden. Dies geschieht in Abhängigkeit von zahlreichen Umgebungsvariablen unter anderem mit dem Ziel, den verbrauchsgünstigsten Betriebspunkt für alle Momentenquellen, d.h. Antriebsmotoren, einzustellen. Der Kern der oben erwähnten kontinuierlichen Momentenüberwachung ist der Momentenvergleich in der zweiten Ebene, der Überwachungsebene, in der ein zulässiges Moment der zweiten Ebene (Überwachungsebene) mit einem Ist-Moment in der zweiten Ebene (Überwachungsebene) verglichen wird. Überschreitet das Ist-Moment das zulässige Moment, wird eine dementsprechende Fehlerreaktion eingeleitet. Die Berechnung des zulässigen Moments in der zweiten Ebene (Überwachungsebene) bildet die Funktionalität der ersten Ebene, der Funktiönsebene, ab. In der zweiten Ebene (Überwachungsebene) werden nochmals die Berechnungen aus der ersten Ebene (Funktionsebene) durchgeführt, jedoch stark vereinfacht, um Fehlermöglichkeiten zu verringern. Bei Hybridfahrzeugen wird von der Fahrzeugsteuerung eine Momentenanforderung (Soll-Moment) an die einzelnen Momentenquellen, die Motoren, versendet. Das tatsächlich abgegebene Moment (Ist-Moment) kann jedoch von diesem Soll-Wert abweichen, da die Motorsteuergeräte momentenerhöhende Eigenfunktionalitäten besitzen können, so z.B. Leerlaufregler und Nebenaggregatkompensationen. Darüber hinaus bewirkt die Trägheit der Momentenquellen, der Motoren, eine dynamische Momentenabweichung. Diese Abweichung muss bei der Berechnung des zulässigen Moments in der zweiten Ebene (Überwachungsebene) nachgebildet werden, um ein fehlerhaftes Ansprechen der Momentenüberwachung zu verhindern. Dies stellt jedoch einen sehr hohen Aufwand hinsichtlich der Entwicklung und der Applikation der zweiten Ebene, d.h. der Überwachungsebene im Fahrzeugsteuergerät dar.

Die Berechnungen des zulässigen Moments in der Überwachungsebene erfordert eine Abbildung der Funktionalität der ersten Ebene, d.h. der Funktionsebene in der zweiten Ebene, d.h. der Überwachungsebene. In der zweiten Ebene werden nochmals die Berechnungen aus der ersten Ebene durchgeführt. Um Ungenauigkeiten durch die in der zweiten Ebene, d.h. der Überwachungsebene, implementierten Vereinfachungen auszugleichen, wird auf das ermittelte Ergebnis ein "Offset" hinzugerechnet. Bei Fahrzeugen mit mehren Motoren, wie z.B. im Falle von Hybridfahrzeugen, wird in der ersten Ebene, d.h. der Funktionsebene ein Soll-Moment auf die verschiedenen Momentenquellen, d.h. die Einzelantriebe eines Mehrfachantriebs aufgeteilt. Diese Aufteilung ist komplex und hängt von einer Vielzahl von Parametern ab, wie z.B. Betriebsart, Betriebsstrategie, Zustand der Einzelantriebe, Kennfelder der Einzelantriebe usw. Zur Überwachung der Momentenaufteilung ist es nach dem bisherigen Vorgehen erforderlich, diese in der ersten Ebene, d.h. der Funktionsebene vorgenommene, komplexe Aufteilung in der Überwachungsebene, d.h. in der zweiten Ebene nachzubilden, um die aufgeteilten Einzelmomente abzusichern. Mit der Nachbildung der Funktionsebene der ersten Ebene, d.h. der Funktionsebene in der zweiten Ebene, d.h. der Überwachungsebene geht ein großer Entwicklungs- und Applikationsaufwand einher. Zudem werden, hervorgerufen durch die in der Überwachungsebene üblicherweise vorgenommenen Vereinfachungen, größere Ungenauigkeiten hinsichtlich der Überwachung, d.h. ein größerer Offset, erhalten.

### Darstellung der Erfindung

Dem erfindungsgemäß vorgeschlagenen Verfahren folgend, erfolgt ein Vergleich eines resultierenden Soll-Moments nach dessen Aufteilung mit einem zulässigen Moment vor der Aufteilung. Damit kann eine Nachbildung der Momentenaufteilung in der zweiten Ebene, der Überwachungsebene eines Motorsteuergeräts oder eines Fahrzeugsteuergerätes entfallen. Für die Beschleunigung eines Fahrzeugs mit einem Mehrfachantrieb wie z.B. einem Hybridantrieb ist nicht die Verteilung der Einzelmomente, wie z.B. der einzelnen Soll-Momente M_{SOLL,V} und M_{SOLL},_{E} für die Einzelantriebe eines Hybridantriebs mit mindestens einer Verbrennungskraftmaschine und mit mindestens einem Elektroantrieb entscheidend, sondern das resultierende Soll-Moment. Mit der erfindungsgemäß vorgeschlagenen Lösung wird eine Überwachung des resultierenden Soll-Moments M_{RES,SOLL} erreicht, so dass bei einer in der ersten Ebene, d.h. der Funktionsebene des Motorsteuergeräts erfolgten fehlerhaften Aufteilung des Soll-Moments durch die zweite Ebene, die Überwachungsebene keine Fehlerreaktionen ausgelöst werden, solange das resultierende Soll-Moment M_{RES,SOLL} fehlerfrei ist.

Durch das Entfallen einer Nachbildung der Soll-Momentenaufteilung in der zweiten Ebene, der Überwachungsebene des Motorsteuergeräts, wird ein hoher Aufwand, der bei der Nachbildung der Soll-Momentenaufteilung in der zweiten Ebene, d.h. der Überwachungsebene zu betreiben wäre, vermieden. Dem erfindungsgemäß vorgeschlagenen Verfahren folgend, wird die tatsächlich sicherheitsrelevante Größe, d.h. im vorliegenden Falle die Bildung des resultierenden Soll-Moments M_{RES,SOLL} überwacht, die für Beschleunigung eines Fahrzeugs mit einem Mehrfachantrieb wie z.B. einem Hybridantrieb, tatsächlich relevant ist.

Die in der in der zweiten Ebene, d.h. der Überwachungsebene erfolgende Bildung des resultierenden Soll-Moments, M_{RES,SOLL} stellt sich im einfachsten Falle als eine Addition dar. Bei aufwendiger gestalteten Triebstrangkonfigurationen wie z.B. bei einem leistungsverzweigenden Hybridantrieb, um ein Beispiel zu nennen, sind die Kopplungsbedingungen der Einzelantriebe des Hybridantriebs zu berücksichtigen. Bevorzugt kann mit dem erfindungsgemäß vorgeschlagenen Verfahren in der zweiten Ebene, d.h. der Überwachungsebene ein kontinuierliches Vergleichen eines ermittelten zulässigen Moments M_{ZUL} mit dem jeweils aktuell gebildeten resultierenden M_{RES,SOLL} unter Heranziehung der Soll-Momente M_{SOLL,V} und M_{SOLL},_{E} für die Einzelantriebe des Hybridantriebs durchgeführt werden. Anstelle der Soll-Momente M_{SOLL,V} und M_{SOLL,E} können für den Vergleich mit dem zulässigen Moment M_{ZUL} auch die jeweiligen Ist-Momente herangezogen werden, die in diesem Fall von den Einzelantrieben wie z.B. mindestens einer Verbrennungskraftmaschine und mindestens einem Elektroantrieb an die zweite Ebene, d.h. die Überwachungsebene des Motorsteuergeräts rückgemeldet werden. Es ist weiterhin auch möglich, das zulässige Moment M_{ZUL} anstelle mit den Soll-Momenten M_{SOLL,V} und M_{SOLL,E} mit den Ist-Momenten der Einzelantriebe zu vergleichen. Allerdings sind bei dieser Verfahrensvariante Momentenabweichungen bewirkende Eigenfunktionalitäten der Einzelantriebe zu berücksichtigen.

### Zeichnung

Anhand der Zeichnung wird die Erfindung nachstehend eingehender beschrieben.

Es zeigt:
Figur 1 ein Motorsteuergerät eines Mehrfachantriebs, in dem eine in der ersten Ebene, d.h. der Funktionsebene implementierte Momentenaufteilung in der zweiten Ebene, d.h. der Überwachungsebene nachgebildet ist und
Figur 2 ein Motorsteuergerät, in welchem in der ersten Ebene, d.h. der Funktionsebene eine Momentenaufteilung implementiert ist und in der zweiten Ebene, d.h. der Überwachungsebene, ein resultierendes Moment ermittelt wird.

### Ausführungsbeispiel

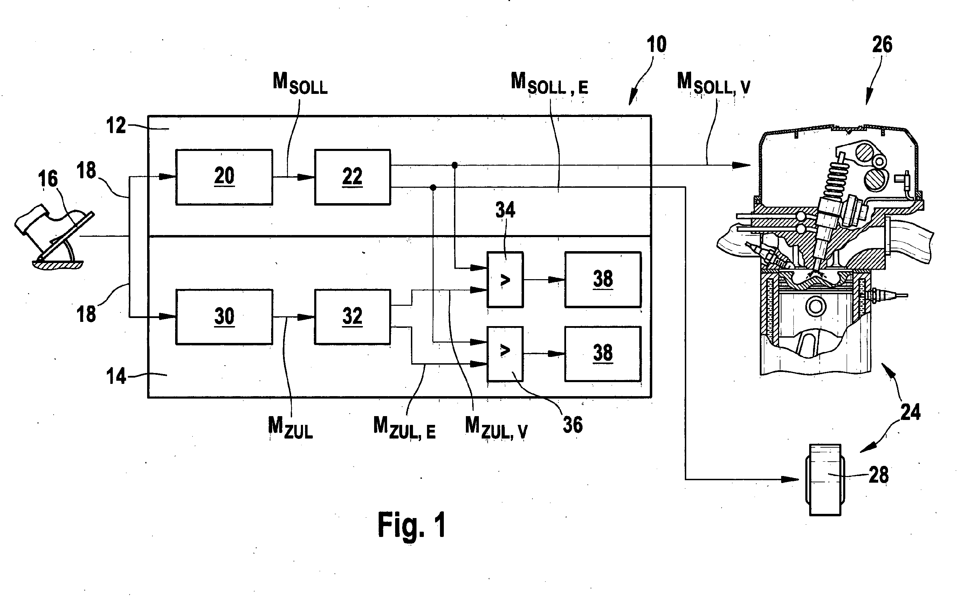

Der Darstellung gemäß Figur 1 ist in schematischer Darstellung ein Motorsteuergerät zu entnehmen, bei dem sowohl in der ersten Ebene (Funktionsebene) als auch in der zweiten Ebene (Überwachungsebene) eine Momentenaufteilung vorgenommen wird.

Ein in Figur 1 dargestelltes Motorsteuergerät 10 umfasst eine erste Ebene 12, bei der es sich um die Funktionsebene handelt, sowie eine zweite Ebene 14, welche die Überwachungsebene darstellt. Mittels der zweiten Ebene 14 (Überwachungsebene) wird im Rahmen einer kontinuierlichen Momentenüberwachung die in der ersten Ebene 12 (Funktionsebene) erfolgende Vorgabe des Soll-Moments überwacht. Die Übertragung des Fahrerwunsches hinsichtlich einer Beschleunigung des Fahrzeugs wird über eine als Fahrpedal 16 ausgebildete Fahrerwunsch-Übertragungseinrichtung an das Motorsteuergerät 10 übertragen. Der Fahrerwunsch wird als Soll-Vorgabe 18 sowohl an die erste Ebene 12 (Funktionsebene) als auch an die zweite Ebene 14 (Überwachungsebene) des Motorsteuergeräts 10 übertragen. In der ersten Ebene 12 (Funktionsebene) erfolgt innerhalb einer Berechungsstufe 20 die Ermittlung eines Soll-Moments M_{SOLL}. Das ermittelte Soll-Moment M_{SOLL} wird in einer Momentenaufteilung für das Soll-Moment in ein Soll-Moment M_{SOLL,V} für einen Einzelantrieb 26 eines Hybridantriebs 24 und in ein Soll-Moment M_{SOLL,E} für einen weiteren Einzelantrieb eines Hybridantriebs 24 aufgeteilt. Der Hybridantrieb 24 umfasst mindestens eine Verbrennungskraftmaschine 26 sowie mindestens einen Elektroantrieb 28, an welche die in der Momentenaufteilung 22 aufgeteilten Soll-Momente M_{SOLL,V} bzw. M_{SOLL,E} gesendet werden.

In der zweiten Ebene 14 (Überwachungsebene) erfolgt in einer Berechnungsstufe 30 die Ermittlung eines zulässigen Moments M_{ZUL}. Das ermittelte zulässige Moment M_{ZUL} wird in einer ebenfalls in der zweiten Ebene 14 (Überwachungsebene) implementierten Momentenaufteilung 32 in ein zulässiges Moment M_{ZUL,E} für den mindestens einen Elektroantrieb 28 und in ein zulässiges Moment M_{ZUL,V} für die mindestens eine Verbrennungskraftmaschine 26 des Hybridantriebs 24 aufgeteilt. Ferner befinden sich in der zweiten Ebene 14 (Überwachungsebene) eine erste Vergleichsstufe 34 sowie eine zweite Vergleichsstufe 36. In der ersten Vergleichsstufe 34 folgt ein kontinuierliches Vergleichen des Soll-Moments M_{SOLL,V} mit dem zulässigen Moment M_{ZUL,V} für den Einzelantrieb 26, im vorliegenden Fall für die mindestens eine Verbrennungskraftmaschine 26. Für den Fall, dass das Soll-Moment M_{SOLL,V} das zulässige Moment M_{ZUL,V} übersteigt, wird eine Fehlerreaktion 38 ausgelöst. Analog dazu erfolgt in der zweiten Vergleichsstufe 36 ein kontinuierliches Vergleichen des Soll-Moments M_{SOLL,E} mit dem zulässigen Moment M_{ZUL,E} für den weiteren Einzelantrieb 28 des Hybridantriebs 24, im vorliegenden Fall für den mindestens einen Elektroantrieb 28. Abhängig vom Resultat des kontinuierlichen Vergleichens 36 erfolgt das Auslösen einer Fehlerreaktion, für den Fall, dass das Soll-Moment M_{SOLL,E} das zulässige Moment M_{ZUL,E} für den mindestens einen Elektroantrieb 28 übersteigt.

Das in Figur 1 dargestellte Konzept für ein Motorsteuergerät 10 bedingt eine Nachbildung der in der ersten Ebene 12 implementierten Momentenaufteilung 22 auch in der zweiten Ebene 14, der Überwachungsebene. Dies geht mit einem relativ hohen Entwicklungs- und Applikationsaufwand einher. Ferner wird aufgrund der in der zweiten Ebene 14, der Überwachungsebene, vorgenommenen Vereinfachungen eine größere Ungenauigkeit hinsichtlich der Momentenaufteilung erhalten, was sich im Allgemeinen durch eine größere Abweichung hinsichtlich der erhaltenen zulässigen Momente M_{ZUL,V} und M_{ZUL,E} von den tatsächlichen Momentenwerten ausdrückt.

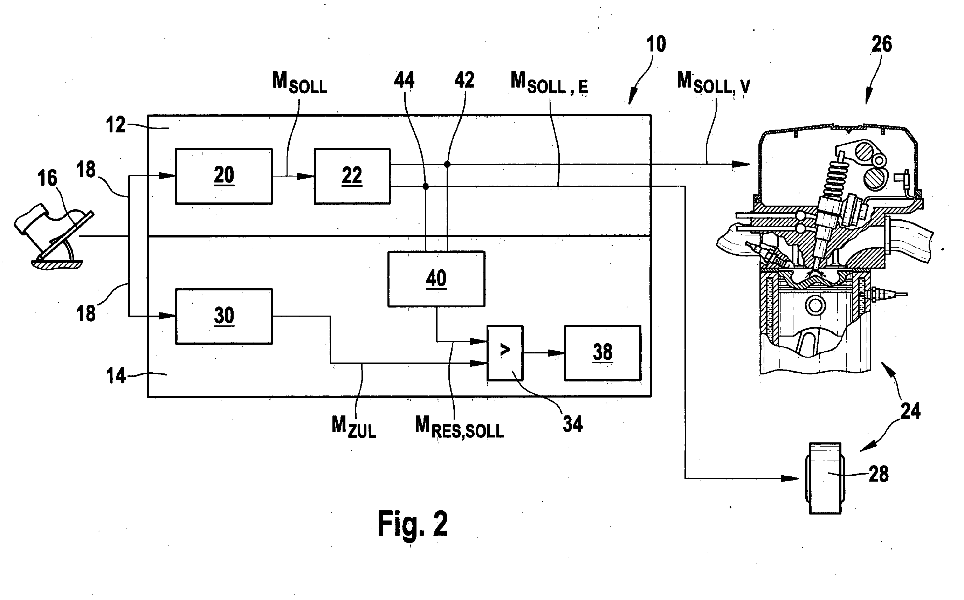

Aus der Darstellung gemäß Figur 2 geht das erfindungsgemäß vorgeschlagene Verfahren am Beispiel eines Motorsteuergeräts näher hervor.

Der Darstellung gemäß Figur 2 ist zu entnehmen, dass auch in diesem Fall eine Übertragung des Fahrerwunsches durch eine als Fahrpedal 16 ausgebildete. Fahrerwunsch-Übertragungseinrichtung als Soll-Vorgabe 18 sowohl der ersten Ebene 12 (Funktionsebene) als auch der zweiten Ebene 14 (Überwachungsebene) des Motorsteuergeräts 10 aufgegeben wird. In der ersten Ebene 12 (Funktionsebene) erfolgt in der Berechnungsstufe 20 die Ermittlung eines Soll-Moments M_{SOLL} und in der sich an die Berechnungsstufe 20 anschließenden Momentenaufteilung 22 eine Aufteilung des Soll-Moments M_{SOLL} auf ein Soll-Moment M_{SOLL,V} und ein Soll-Moment M_{SOLL,E}. Die Werte der jeweiligen Teil-Soll-Momente M_{SOLL,V} und M_{SOLL,E} werden an Abgriffen 42, 44 an eine in der zweiten Ebene 14 (Überwachungsebene) implementierte Bildung 40 eines resultierenden Soll-Moments M_{RES,SOLL} übertragen. Im einfachsten Fall kann es sich dabei um eine Additionsstufe handeln. Bei aufwendigeren Triebstrangkonfigurationen wie z.B. bei einem leistungsverzweigenden Hybridantrieb sind im Rahmen der Bildung 40 des resultierenden Soll-Moments M_{RES,SOLL} die Kopplungsbedingungen der mindestens einen Verbrennungskraftmaschine 26 mit dem mindestens einen Elektroantrieb 28 des Hybridantriebs 24 zu berücksichtigen. Als Kopplungsbedingungen bei leistungsverzweigenden Hybridantrieben sind z.B. die Drehzahlen der Elektroantriebe zu berücksichtigen, oder z.B. der Zustand einer Trennkupplung zwischen der Verbrennungskraftmaschine 26 und dem mindestens einen Elektroantrieb 28 des leistungsverzweigenden Hybridantriebs.

In der zweiten Ebene 14 (Überwachungsebene) wird aus der Soll-Vorgabe 18 in der Berechnungsstufe 30 zunächst das zulässige Moment M_{ZUL} bestimmt, welches unmittelbar an die erste Vergleichsstufe 34 übertragen wird: An die erste Vergleichsstufe 34 wird das ermittelte resultierende Soll-Moment M_{RES,SOLL} übertragen. Demzufolge unterbleibt in der zweiten Ebene 14 (Überwachungsebene) die Mömentenaufteilung des zulässigen Moments M_{ZUL} in ein zulässiges Moment M_{ZUL,E} für den mindestens einen Elektroantrieb 28 sowie M_{ZUL,V}, das zulässige Moment für die mindestens eine Verbrennungskraftmaschine 26 des Hybridantriebs 24. Damit lösen in der ersten Ebene 12 (Funktionsebene) eventuell auftretende Fehler bei der Aufteilung des Soll-Moments M_{SOLL} in der Momentenaufteilung 22 auf Soll-Momente M_{SOLL,V} und M_{SOLL},_{E} für die mindestens eine Verbrennungskraftmaschine 26 und den mindestens einen Elektroantrieb 28 in der zweiten Ebene 14 (Überwachungsebene) des Motorsteuergeräts 10 keine Fehler aus, solange das resultierende Moment M_{RES,SOLL} im Rahmen des kontinuierlichen Vergleichens in der ersten Vergleichsstufe 34 unterhalb des zulässigen Moments M_{ZUL} bleibt. Mit dem erfindungsgemäß vorgeschlagenen Verfahren wird demnach die für die Beschleunigung des Fahrzeugs mit einem Hybridantrieb 24 maßgebliche Größe, nämlich das resultierende Soll-Moment M_{RES,SOLL} kontinuierlich überwacht. Die in der ersten Ebene 12 (Funktionsebene) des Motorsteuergeräts 10 erfolgende Momentenaufteilung 22 des Soll-Moments M_{SOLL} auf Einzel-Soll-Momente M_{SOLL,V} bzw. M_{SOLL,E} auf die Einzelantriebe 26, 28 des Hybridantriebs 24 ist für die tatsächlich sicherheitsrelevante Größe, im vorliegenden Falle das resultierende Soll-Moment M_{RES,SOLL} nicht relevant.

Wenngleich in der Darstellung gemäß Figur 2 die Bildung 40 des resultierenden Soll-Moments basierend auf den Einzel-Soll-Momenten M_{SOLL,V} bzw. M_{SOLL,E} erfolgt und das derart ermittelte resultierende Soll-Moment M_{RES,SOLL} mit dem in der zweiten Ebene 14 (Überwachungsebene) ermittelten zulässigen Moment M_{ZUL} im Rahmen eines kontinuierlichen Vergleichs 34 überprüft wird, können in die Bildung 40 des resultierenden Moments anstelle der Einzel-Soll-Momente M_{SOLL,V} bzw. M_{SOLL,E} auch die tatsächlichen Ist-Momente der mindestens einen Verbrennungskraftmaschine 26 und des mindestens einen Elektroantriebs 28 des Hybridantriebs 24 eingehen. Auch bei dieser Alternative ist die Aufteilung der Einzel-Ist-Momente des Gesamt-Ist-Moments unerheblich, solange das resultierende Ist-Moment M_{RES,IST} unterhalb des in der zweiten Ebene 14 (Überwachungsebene) berechneten zulässigen Moments M_{ZUL} liegt. Werden anstelle der Einzel-Soll-Momente M_{SOLL,V} oder M_{SOLL,E} die tatsächlichen Ist-Momente berücksichtigt, so werden diese nicht in der zweiten Ebene 14 berechnet, sondern in den jeweiligen Antriebssteuergeräten berechnet und z.B. über einen CAN-Bus an die zweite Ebene 14 übertragen. Auf diese Weise lässt sich das resultierende Ist-Moment des Hybridantriebs überwachen. Wird hingegen das resultierende Soll-Moment überwacht, so können die Einzelsollmomente M_{SOLL,V} und M_{SOLL,E} auch an den jeweiligen Motorsteuergeräten plausibilisiert werden.

## Patentansprüche

1. Verfahren zur Überwachung der Momentenaufteilung (22) bei Mehrfachantrieben, insbesondere bei Hybridantrieben (24), die mindestens zwei Einzelantriebe (26,28) aufweisen, die mittels eines Motorsteuergeräts (10) gesteuert werden, indem eine Momentenaufteilung (22) eines Soll-Moments M_{SOLL} auf Einzel-Soll-Momente der mindestens zwei Einzelantriebe (26,28) erfolgt, **dadurch gekennzeichnet, dass** nach der Momentenaufteilung (22) die Bildung (40) eines resultierenden Moments M_{RES} basierend auf den Einzel-Soll-Momenten oder auf tatsächlichen Ist-Momenten erfolgt, und das resultierende Moment kontinuierlich mit einem Moment vor der Momentenaufteilung (22) verglichen (34) wird.

2. Verfahren gemäß Anspruch 1, wobei der Mehrfachantrieb ein Hybridantrieb ist und mindestens eine Verbrennungskraftmaschine (26) und mindestens einen Elektroantrieb (28) umfasst, **dadurch gekennzeichnet, dass** das resultierende Moment M_{RES} aus den Soll-Momenten M_{SOLL,V}, M_{SOLL,E}, für die mindestens eine Verbrennungskraftmaschine (26) und den mindestens einen Elektroantrieb (28) zu M_{RES,SOLL} gebildet (40) wird.

3. Verfahren gemäß Anspruch 1, wobei der Mehrfachantrieb ein Hybridantrieb ist und mindestens eine Verbrennungskraftmaschine (26) und mindestens einen Elektroantrieb (28) umfasst, **dadurch gekennzeichnet, dass** das resultierende Moment M_{RES} aus Ist-Momenten M_{IST,V}, M_{IST,E} der mindestens einen Verbrennungskraftmaschine (26) und des mindestens einen Elektroantriebs (28) zu M_{RES,IST} gebildet wird.

4. Verfahren gemäß Anspruch 1, **dadurch gekennzeichnet, dass** das Moment vor der Momentenaufteilung (22) das zulässige Moment M_{ZUL} ist.

5. Verfahren gemäß der Ansprüche 2 oder 3, **dadurch gekennzeichnet, dass** die Bildung (40) der resultierenden Momente M_{RES,SOLL}, M_{RES,IST} in einer zweiten Ebene (14), die als Überwachungsebene einer ersten Ebene ausgeführt ist, durchgeführt wird.

6. Verfahren gemäß der Ansprüche 2 oder 3, **dadurch gekennzeichnet, dass** die Bildung (40) der resultierenden Momente M_{RES,SOLL}, M_{RES,IST} durch Addition der Soll-Momente M_{SOLL,V}, M_{SOLL,E} oder Addition der Ist-Momente M_{IST,V} , M_{IST,E} erfolgt.

7. Verfahren gemäß der Ansprüche 2 oder 3, **dadurch gekennzeichnet, dass** die Bildung (40) der resultierenden Momente M_{RES,SOLL,} M_{RES,IST} bei leistungsverzweigenden Hybridantrieben (24) unter Berücksichtigung der Kopplungsbedingungen der mindestens zwei Einzelantriebe (26, 28) erfolgt.

8. Verfahren gemäß der Ansprüche 1 bis 4, **dadurch gekennzeichnet, dass** ein kontinuierliches Vergleichen (34) des resultierenden Soll-Moments M_{RES,SOLL} oder des resultierenden Ist-Moments M_{RES,IST} mit dem in der zweiten Ebene (14) ermittelten zulässigen Moments M_{ZUL} erfolgt und bei Überschreiten des zulässigen Moments M_{ZUL} entweder durch das resultierende. Soll-Moment M_{RES,SOLL} oder das resultierende. Ist-Moment M_{RES,IST} eine Fehlerreaktion (38) ausgelöst wird.

9. Motorsteuergerät (10) zur Durchführung des Verfahrens gemäß einem der Ansprüche 1 bis 8 für einen Mehrfachantrieb, insbesondere einen Hybridantrieb (24), der mindestens zwei Einzelantriebe (26, 28) umfasst, wobei in einer ersten Ebene (12) eine Momentenaufteilung (22) eines Soll-Moments M_{SOLL} erfolgt und mit einer zweiten Ebene (14), **dadurch gekennzeichnet, dass** in der als Überwachungsebene dienenden zweiten Ebene (14) die Bildung (40) eines resultierenden Moments M_{RES} implementiert ist und eine erste Vergleichsstufe (34) vorgesehen ist, zum kontinuierlichen Vergleichen des resultierenden Moments M_{RES} mit einem Moment vor der Momentenaufteilung (22).

## Claims

1. Method for monitoring the torque distribution (22) in multiple drives, in particular in hybrid drives (24) which have at least two individual drives (26, 28) which are controlled by means of an engine control unit (10) by performing a torque distribution (22) of a desired torque M_{SOLL} onto individual desired torques of the at least two individual drives (26, 28), **characterized in that** the formation (40) of a resulting torque M_{RES} is performed after the torque distribution (22) on the basis of the individual desired torques or on actual torques, and the resulting torque is continuously compared (34) with a torque before the torque distribution (22).

2. Method according to Claim 1, the multiple drive being a hybrid drive and comprising at least one internal combustion engine (26) and at least one electric drive (28), **characterized in that** the resulting torque M_{RES} is formed (40) as M_{RES,SOLL} from the desired torques M_{SOLL,V}, M_{SOLL,E} for the at least one internal combustion engine (26) and the at least one electric drive (28).

3. Method according to Claim 1, the multiple drive being a hybrid drive and comprising at least one internal combustion engine (26) and at least one electric drive (28), **characterized in that** the resulting torque M_{RES} is formed as M_{RES,IST} from actual torques M_{IST,V}, M_{IST,E} of the at least one internal combustion engine (26) and the at least one electric drive (28).

4. Method according to Claim 1, **characterized in that** the torque before the torque distribution (22) is the permissible torque M_{ZUL}.

5. Method according to either of Claims 2 and 3, **characterized in that** the formation (40) of the resulting torques M_{RES,SOLL}, M_{RES,IST} is carried out in a second plane (14), which is designed as a monitoring plane of a first plane.

6. Method according to either of Claims 2 and 3, **characterized in that** the formation (40) of the resulting torques M_{RES,SOLL}, M_{RES,IST} is performed by adding the desired torques M_{SOLL,V}, M_{SOLL,E} or adding the actual torques M_{IST,V}, M_{IST,E}.

7. Method according to either of Claims 2 or 3, **characterized in that** the formation (40) of the resulting torques M_{RES,SOLL}, M_{RES,IST} is performed in the case of power-splitting hybrid drives (24) by taking account of the coupling conditions of the at least two individual drives (26, 28).

8. Method according to Claims 1 to 4, **characterized in that** a continuous comparison (34) of the resulting desired torque M_{RES,SOLL} or of the resulting actual torque M_{RES,IST} is performed with the permissible torque M_{ZUL} determined in the second plane (14), and an error reaction (38) is triggered upon overshooting of the permissible torque M_{ZUL} either by the resulting desired torque M_{RES,SOLL} or by the resulting actual torque M_{RES,IST}.

9. Engine control unit (10) for carrying out the method according to one of Claims 1 to 8 for a multiple drive, in particular a hybrid drive (24), which comprises at least two individual drives (26, 28), a torque distribution (22) of a desired torque M_{SOLL} being performed in a first plane (12), and with a second plane (14), **characterized in that** in the second plane (14) serving as monitoring plane the formation (40) of a resulting torque M_{RES} is implemented and a first comparison stage (34) is provided for continuous comparison of the resulting torque M_{RES} with a torque before the torque distribution (22).

## Revendications

1. Procédé de surveillance de la répartition (22) des couples dans des entraînements multiples, en particulier dans des entraînements hybrides (24) qui présentent au moins deux entraînements distincts (26, 28) commandés au moyen d'un appareil (10) de commande de moteur, en répartissant (22) un couple de consigne M_{SOLL} en couples de consigne distincts des deux ou plusieurs entraînements distincts (26, 28),
**caractérisé en ce que**
un couple résultant M_{RES} basé sur les couples de consigne distincts ou sur des couples effectifs en cours est formé (40) selon la répartition (22) des couples, et
**en ce que** le couple résultant est comparé (34) en continu à un couple qui prévaut avant la répartition (22) des couples.

2. Procédé selon la revendication 1, dans lequel l'entraînement multiple est un entraînement hybride et comporte au moins un moteur (26) à combustion interne et au moins un entraînement électrique (28), **caractérisé en ce que** le couple résultant M_{RES} est formé (40) des couples de consigne M_{SOLL,V}, M_{SOLL,E} du ou des moteurs (26) à combustion interne et du ou des entraînements électriques (28) pour obtenir M_{RES,SOLL}.

3. Procédé selon la revendication 1, dans lequel l'entraînement multiple est un entraînement hybride et comporte au moins un moteur (26) à combustion interne et au moins un entraînement électrique (28), **caractérisé en ce que** le couple résultant M_{RES} est formé des couples effectifs M_{IST,V}, M_{IST,E} du ou des moteurs (26) à combustion interne et du ou des entraînements électriques (28) pour obtenir M_{RES,IST}.

4. Procédé selon la revendication 1, **caractérisé en ce qu'**avant la répartition (22) des couples, le couple est le couple admissible M_{ZUL}.

5. Procédé selon les revendications 2 ou 3, **caractérisé en ce que** la formation (40) des couples résultants M_{RES,SOLL}, M_{RES,IST} est réalisée dans un deuxième plan (14) configuré comme plan de surveillance d'un premier plan.

6. Procédé selon les revendications 2 ou 3, **caractérisé en ce que** la formation (40) des couples résultants M_{RES,SOLL}, M_{RES,IST} s'effectue par addition des couples de consigne M_{SOLL,V}, M_{SOLL,E} ou par addition des couples effectifs MI_{ST,V}, M_{IST,E}.

7. Procédé selon les revendications 2 ou 3, **caractérisé en ce que** pour des entraînements hybrides (24) à répartition de puissance, la formation (40) des couples résultants M_{RES,SOLL}, M_{RES,IST} s'effectue en tenant compte des conditions d'accouplement des deux ou plusieurs entraînements distincts (26, 28).

8. Procédé selon les revendications 1 à 4, **caractérisé en ce qu'**une comparaison continue (34) du couple de consigne résultant M_{RES,SOLL} ou du couple effectif résultant M_{RES,IST} avec le couple admissible M_{ZUL} déterminé dans le deuxième plan (14) a lieu et **en ce qu'**en cas de dépassement du couple admissible M_{ZUL}, une réaction d'erreur (38) est lancée par le couple de consigne résultant M_{RES,SOLL} ou du couple effectif résultant M_{RES,IST}.

9. Appareil (10) de commande de moteur destiné à mettre en oeuvre le procédé selon l'une des revendications 1 à 8 pour un entraînement multiple, en particulier un entraînement hybride (24) qui comporte au moins deux entraînements distincts (26, 28), et dans lequel, dans un premier plan (12), une répartition (22) d'un couple de consigne M_{SOLL} a lieu et présentant un deuxième plan (14), **caractérisé en ce que** dans le deuxième plan (14) qui sert de plan de surveillance, la formation (40) d'un couple résultant M_{RES} est mise en oeuvre et **en ce qu'**un premier étage de comparaison (34) est prévu pour comparer en continu le couple résultant M_{RES} au couple qui prévaut avant la répartition (22) des couples.
